# EUROPEAN PATENT APPLICATION

(11) **EP 4 831 882 A1**
(43) Date of publication of application: **28.10.2026**
(21) Application number: 25171641.1
(22) Date of filing: 22.04.2025
(51) Int. Cl.: G06Q 10/04, G06Q 10/20, H01H 71/04

(54) **RULE GENERATION SYSTEM**

(71) Applicant: ABB SCHWEIZ AG, 5400 Baden (CH)
(72) Inventor: TAMASCELLI, Nicola, 68259 Mannheim (DE); GITZEL, Ralf, 68165 Mannheim (DE); SONG, Chen, 68163 Mannheim (DE); BHATTACHARYA, Nilavra, 68167 Mannheim (DE); BORRISON, Reuben, 68782 Brühl (DE)
(74) Representative: Maiwald GmbH

(57) **Abstract**

The present invention relates to a rule generation system (200) for a low, medium or high voltage switchgear, comprising:
- a rule generator engine (210);
- an input unit (220); and
- an output unit (230);
wherein the input unit is configured to receive a query regarding an activity relating to a switchgear, wherein the activity comprises one or more of operation of the switchgear, maintenance of the switchgear, rectification of one or more problems with the switchgear;
wherein the input unit is configured to provide the query to the rule generator engine;
wherein the rule generator engine is configured to retrieve information from a knowledge base, the retrieval comprising utilization of the query;
wherein the rule generator engine is configured to generate a prompt, wherein the prompt comprises the query and the retrieved information;
wherein the rule generator engine is configured to generate and/or extract one or more switchgear operation rules, wherein the generation and/or extraction of the one or more switchgear operation rules comprises utilization of a large language model to process the prompt; and
wherein the output unit is configured to output and/or save the one or more switchgear operation rules.

## Description

### FIELD OF THE INVENTION

The present invention relates to a rule generation system for a low, medium or high voltage switchgear, a rule generation method for a low, medium or high voltage switchgear, as well as a computer program element.

### BACKGROUND OF THE INVENTION

While the level of required knowledge for service personnel increases, a wave of new, young and inexperienced people arrive and need tools to support them. This applies to many technical fields, one example being (medium voltage) switchgears. Text and video can capture a lot of knowledge but are less helpful than a more interactive system.

A rules engine serves as a support tool for the service personnel that can guide them, based on the state of the machine (e.g., Switchgears) on what actions need to be performed to maintain a machine. This can be a series of instruction on a smartphone or something deployed on the machine to be serviced. Rules engines depend on a collection of facts presented as rules (e.g., using Ontologies). However, building the rules that are fit for purpose is not simple.

There is a need to address these issues.

### SUMMARY OF THE INVENTION

Therefore, it would be advantageous to have an improved support tool for service personnel working on low, medium and high voltage switchgear.

The object of the present invention is solved with the subject matter of the independent claims, wherein further embodiments are incorporated in the dependent claims.

In a first aspect, there is provided a rule generation system for a low, medium or high voltage switchgear, comprising:
- a rule generator engine;
- an input unit; and
- an output unit.

The input unit is configured to receive a query regarding an activity relating to a switchgear. The activity relating to the switchgear comprises one or more of: operation of the switchgear, maintenance of the switchgear, rectification of one or more problems with the switchgear.

The input unit is configured to provide the query to the rule generator engine.

The rule generator engine is configured to retrieve information from a knowledge base, the retrieval comprising utilization of the query.

The rule generator engine is configured to generate a prompt. The prompt comprises the query and the retrieved information.

The rule generator engine is configured to generate and/or extract one or more switchgear operation rules. The generation and/or extraction of the one or more switchgear operation rules comprises utilization of a large language model to process the prompt.

The output unit is configured to output and/or save the one or more switchgear operation rules.

The input unit can be a single input interface or multiple different input interfaces that perform the functions as described.

The rule generator engine can be one or more processors that perform the functions as described.

The knowledge base can be one or more databases, computational storage media, and can include storage media of the rule generation system itself and/or the rule generation system can interrogate storage media external to the rule generation system as part of the retrieval of the information.

In an example, the query is input from an operator or technician.

The output unit can be a single input interface or multiple different input interfaces that perform the functions as described.

Thus, a new technique is provided that makes use of a Large Language Model (LLM) such as ChatGPT to determine switchgear operation rules that can then be used, to support service personnel to guide them when working on a switchgear, wherein domain specific knowledge is utilized to augment the process of generating the rules.

The new development, where relevant information from a knowledge base is utilized in the generation/extraction of rules mitigates problems that could be caused by a LLM lacking domain specific and/or product specific knowledge.

In an example, the one or more switchgear operation rules are saved in the knowledge base.

In an example, the one or more switchgear operation rules are output to another system.

In an example, the query is in a natural language.

In an example, the one or more switchgear operation rules comprises a switchgear operation rule that comprises computational code.

In an example, the one or more switchgear operation rules comprises a switchgear operation rule that comprises natural language.

In an example, the rule generator engine is configured to utilize the large language model to process the prompt to generate and/or extract one or more preliminary switchgear operation rules. The output unit is configured to output the one or more preliminary switchgear operation rules. The input unit is configured to receive an edit request for an edit to at least one preliminary switchgear operation rule of the one or more preliminary switchgear operation rules. The generation and/or extraction of the one or more switchgear operation rules comprises utilization of the edit request.

In an example, the edit request is input by the operator or technician who input the query, but can also be input by another person such as an expert operator or senior technician.

In this manner, human feedback is provided to fine tune the rules, thereby in effect validating the output of the rule generation system and making the rules that are finally provided more fit for purpose.

Thus, for example a preliminary rule is output onto a screen for an operator or technician or sensor person to validate and edit is necessary.

In an example, the input unit is configured to receive a feedback request to be associated with at least one preliminary switchgear operation rule of the one or more preliminary switchgear operation rules, and wherein the generation and/or extraction of the one or more switchgear operation rules comprises utilization of the feedback request.

Thus, an operator or technician or expert can indicate that a particular rule is one or more of suitable for the current situation, most suitable for the current situation, should be used in conjunction with another rule, has been used successfully before, indicates what steps are most complicated or need to be carried out most carefully.

In an example, the one or more preliminary switchgear operation rules comprises a preliminary switchgear operation rule that comprises computational code.

In an example, the one or more preliminary switchgear operation rules comprises a preliminary switchgear operation rule that comprises natural language.

In an example, the edit request is in a natural language.

In an example, the large language model has been trained on a plurality of example rules relating to operation of the switchgear and associated domain information.

To put this another way, the LLM is finetuned/trained through the provision of contextual information in the form of examples and domain information, that could be in the form of vector embeddings, in order that desired results are generated.

In an example, the large language model is a pre-trained LLM.

To put this another way, the LLM can be an existing LLM, where the LLM can read available contextual information, but it does not affect its internal parameters.

In an example, the information retrieved from the knowledge base comprises one or more historical rules.

In an example, the information retrieved from the knowledge base comprises information from one or more humans relating to the one or more historical rules.

In an example, the information from one or more humans relating to the one or more historical rules comprises feedback from human experts, feedback from a rule designer, feedback from an operator who utilized the rule in the field.

Thus, the generation/extraction of rules for a particular task can utilize previously generated rules that have been validated and/or commented upon by experts who generated and/or utilized the rules

In other words, in the generation / extraction of new rules, feedback from human experts is taken into account, where those human experts can for example be rule editors and/or field operators who use the rules in the real world.

To put this another way, explicit feedback can be provided, but additionally or alternatively such feedback can be implicit.

Thus, explicit feedback can be provided by a human such as a technician after using the rule or an expert or implicit feedback can be provided based on for example on how many times a rule has been used successfully, that provides implicit feedback in terms of validation of the rule.

The explicit feedback can for example be that an operator or expert provides feedback that an action step in a rule makes no sense and/or provides feedback in the form of a suggested new action step.

In an example, the information retrieved from the knowledge base comprises information from technical dictionaries and/or information from synonym resolution systems.

In an example, the information from technical dictionaries and/or information from synonym resolution systems comprises information mapping technical terms with normal language terms.

In this way, the required relevant information to augment the generation and/or extraction of rules can be retrieved from maintenance or service reports even when those reports are from different countries and written in different languages, where different terms and even slang could be used in such different reports

In an example, the information retrieved from the knowledge base comprises information from one or more service reports of a plurality of service reports, wherein the plurality of service reports comprise natural language in one or more different languages, the one or more different languages comprising one or more of English, German, French, Italian, Spanish, French, Portuguese, Japanese, Chinese.

In an example, the plurality of service reports comprise one or more pre-processed service reports. The input unit is configured to receive a new service report. The rule generation system is configured to utilize an entity recognition and extraction algorithm to extract information from the new report to generate a pre-processed version of the new report. The information extracted from the new report comprises one or more of a type of device, a serial number of a device, a facility where a device was located, a country where a device was located, a problem associated with a device, work carried out to fix a problem with a device. The output unit is configured to save the pre-processed version of the new report in the knowledge base.

In an example, the input unit is configured to receive a new service report. The rule generation system is configured to utilize the entity recognition and extraction algorithm to extract information from the new report to generate an entity file associated with the new service report. The information extracted from the new service report comprises one or more of a type of device, a serial number of a device, a facility where a device was located, a country where a device was located, a problem associated with a device, work carried out to fix a problem with a device. The output unit is configured to save the entity file associated with the new service report and the new report in the knowledge base.

Thus, by in effect preparing reports as they are received and saving these reports as prepared reports in the knowledge base, the relevant information can be readily retrieved from the knowledge base even when a raw new report was an unstructured report.

In other words, structured information is enabled to be retrieved from unstructured reports or indeed from incomplete reports.

Thus, as new service reports come in, relevant information in the report such as type of device, a serial number of a device, a facility where a device was located, a country where a device was located, can be extracted and if necessary transformed into a standard format that facilitates searching and this extracted information can be inserted back into the new service report and saved in a database or saved in the database as a separate file associated with the new service report.

Thus, a pre-processed version of a new service report can be a new service report with extracted information or can be in effect two files, the new service report itself and a separate file with the extracted information from the new service report.

In a second aspect, there is provide a rule generation method for a low, medium or high voltage switchgear. The method comprises:
- receiving, by an input unit, a query regarding an activity relating to a switchgear, wherein the activity comprises one or more of operation of the switchgear, maintenance of the switchgear, rectification of one or more problems with the switchgear;
- providing, by the input unit, the query to a rule generator engine;
- retrieving, by the rule generator engine, information from a knowledge base, the retrieving comprising utilizing the query;
- generating, by the rule generator engine, a prompt, wherein the prompt comprises the query and the retrieved information;
- generating and/or extracting, by the rule generator engine, one or more switchgear operation rules, wherein the generating and/or extracting the one or more switchgear operation rules comprises utilizing a large language model to process the prompt; and
- outputting and/or saving, by an output unit, the one or more switchgear operation rules.

The input unit can be a single input interface or multiple different input interfaces that perform the functions as described.

The rule generator engine can be one or more processors that perform the functions as described.

The knowledge base can be one or more databases, computational storage media, and can include storage media of the rule generation system itself and/or the rule generation system can interrogate storage media external to the rule generation system as part of the retrieval of the information.

In an example, the query is input from an operator or technician.

The output unit can be a single input interface or multiple different input interfaces that perform the functions as described.

Thus, a new technique is provided that makes use of a Large Language Model (LLM) such as ChatGPT to determine switchgear operation rules that can then be used, to support service personnel to guide them when working on a switchgear, wherein domain specific knowledge is utilized to augment the process of generating the rules.

The new development, where relevant information from a knowledge base is utilized in the generation/extraction of rules mitigates problems that could be caused by a LLM lacking domain specific and/or product specific knowledge.

In an example, the one or more switchgear operation rules are saved in the knowledge base.

In an example, the one or more switchgear operation rules are output to another system.

In an example, the query is in a natural language.

In an example, the one or more switchgear operation rules comprises a switchgear operation rule that comprises computational code.

In an example, the one or more switchgear operation rules comprises a switchgear operation rule that comprises natural language.

In an example, the method comprises:
- utilizing, by the rule generator engine, the large language model to process the prompt to generate and/or extract one or more preliminary switchgear operation rules;
- outputting, by the output unit, the one or more preliminary switchgear operation rules;
- receiving, by the input unit, an edit request for an edit to at least one preliminary switchgear operation rule of the one or more preliminary switchgear operation rules; and
- the generating and/or extracting the one or more switchgear operation rules comprises utilizing the edit request.

In an example, the edit request is input by the operator or technician who input the query, but can also be input by another person such as an expert operator or senior technician.

In this manner, human feedback is provided to fine tune the rules, thereby in effect validating the output of the rule generation system and making the rules that are finally provided more fit for purpose.

Thus, for example a preliminary rule is output onto a screen for an operator or technician or sensor person to validate and edit is necessary.

In an example, method comprises:
- receiving, by the input unit, a feedback request to be associated with at least one preliminary switchgear operation rule of the one or more preliminary switchgear operation rules; and
- the generating and/or extracting the one or more switchgear operation rules comprises utilizing the feedback request.

Thus, an operator or technician or expert can indicate that a particular rule is one or more of suitable for the current situation, most suitable for the current situation, should be used in conjunction with another rule, has been used successfully before, indicates what steps are most complicated or need to be carried out most carefully.

In an example, the one or more preliminary switchgear operation rules comprises a preliminary switchgear operation rule that comprises computational code.

In an example, the one or more preliminary switchgear operation rules comprises a preliminary switchgear operation rule that comprises natural language.

In an example, the edit request is in a natural language.

In an example, the large language model has been trained on a plurality of example rules relating to operation of the switchgear and associated domain information.

To put this another way, the LLM is finetuned/trained through the provision of contextual information in the form of examples and domain information, that could be in the form of vector embeddings, in order that desired results are generated.

In an example, the large language model is a pre-trained LLM.

To put this another way, the LLM can be an existing LLM, where the LLM can read available contextual information, but it does not affect its internal parameters.

In an example, the information retrieved from the knowledge base comprises one or more historical rules.

In an example, the information retrieved from the knowledge base comprises information from one or more humans relating to the one or more historical rules.

In an example, the information from one or more humans relating to the one or more historical rules comprises feedback from human experts, feedback from a rule designer, feedback from an operator who utilized the rule in the field.

Thus, the generation/extraction of rules for a particular task can utilize previously generated rules that have been validated and/or commented upon by experts who generated and/or utilized the rules.

In other words, in the generation / extraction of new rules, feedback from human experts is taken into account, where those human experts can for example be rule editors and/or field operators who use the rules in the real world.

To put this another way, explicit feedback can be provided, but additionally or alternatively such feedback can be implicit.

Thus, explicit feedback can be provided by a human such as a technician after using the rule or an expert or implicit feedback can be provided based on for example on how many times a rule has been used successfully, that provides implicit feedback in terms of validation of the rule.

The explicit feedback can for example be that an operator or expert provides feedback that an action step in a rule makes no sense and/or provides feedback in the form of a suggested new action step.

In an example, the information retrieved from the knowledge base comprises information from technical dictionaries and/or information from synonym resolution systems.

In an example, the information from technical dictionaries and/or information from synonym resolution systems comprises information mapping technical terms with normal language terms.

In this way, the required relevant information to augment the generation and/or extraction of rules can be retrieved from maintenance or service reports even when those reports are from different countries and written in different languages, where different terms and even slang could be used in such different reports.

In an example, the information retrieved from the knowledge base comprises information from one or more service reports of a plurality of service reports, wherein the plurality of service reports comprise natural language in one or more different languages, the one or more different languages comprising one or more of English, German, French, Italian, Spanish, French, Portuguese, Japanese, Chinese.

In an example, wherein the plurality of service reports comprise one or more pre-processed service reports, and wherein the method comprises:
- receiving, by the input unit, a new service report;
- utilizing, by the rule generation system, an entity recognition and extraction algorithm to extract information from the new report to generate a pre-processed version of the new report, and wherein the information extracted from the new report comprises one or more of a type of device, a serial number of a device, a facility where a device was located, a country where a device was located, a problem associated with a device, work carried out to fix a problem with a device, and
- saving, by the output unit, the pre-processed version of the new report in the knowledge base.

In an example, the method comprises:
receiving, by the input unit, a new service report;
- utilizing, by the rule generation system, the entity recognition and extraction algorithm to extract information from the new report to generate an entity file associated with the new service report, and wherein the information extracted from the new service report comprises one or more of a type of device, a serial number of a device, a facility where a device was located, a country where a device was located, a problem associated with a device, work carried out to fix a problem with a device; and
- saving, by the output unit, the entity file associated with the new service report and the new report in the knowledge base.

Thus, by in effect preparing reports as they are received and saving these reports as prepared reports in the knowledge base, the relevant information can be readily retrieved from the knowledge base even when a raw new report was an unstructured report.

In other words, structured information is enabled to be retrieved from unstructured reports or indeed from incomplete reports.

Thus, as new service reports come in, relevant information in the report such as type of device, a serial number of a device, a facility where a device was located, a country where a device was located, can be extracted and if necessary transformed into a standard format that facilitates searching and this extracted information can be inserted back into the new service report and saved in a database or saved in the database as a separate file associated with the new service report.

Thus, a pre-processed version of a new service report can be a new service report with extracted information or can be in effect two files, the new service report itself and a separate file with the extracted information from the new service report.

In a third aspect, there is provided a computer program element for controlling a processor to carry out the method according to the second aspect.

In an example, there is provided a computer readable medium having stored the computer element of the third aspect.

The computer program elements can for example be a software program but can also be a FPGA, a PLD or any other appropriate digital means.

The above aspects and examples will become apparent from and be elucidated with reference to the embodiments described hereinafter.

### BRIEF DESCRIPTION OF THE DRAWINGS

Exemplary embodiments will be described in the following with reference to the following drawings:
Fig. 1 shows a first development of a rule generation system;
Fig. 2 shows a detailed example of a first development of a rule generation system;
Fig. 3 shows a first development of a rule generation system;
Fig. 4 shows a further development of a rule generation system; and
Fig. 5 shows a detailed example of a further development of a rule generation system.

### DETAILED DESCRIPTION OF EMBODIMENTS

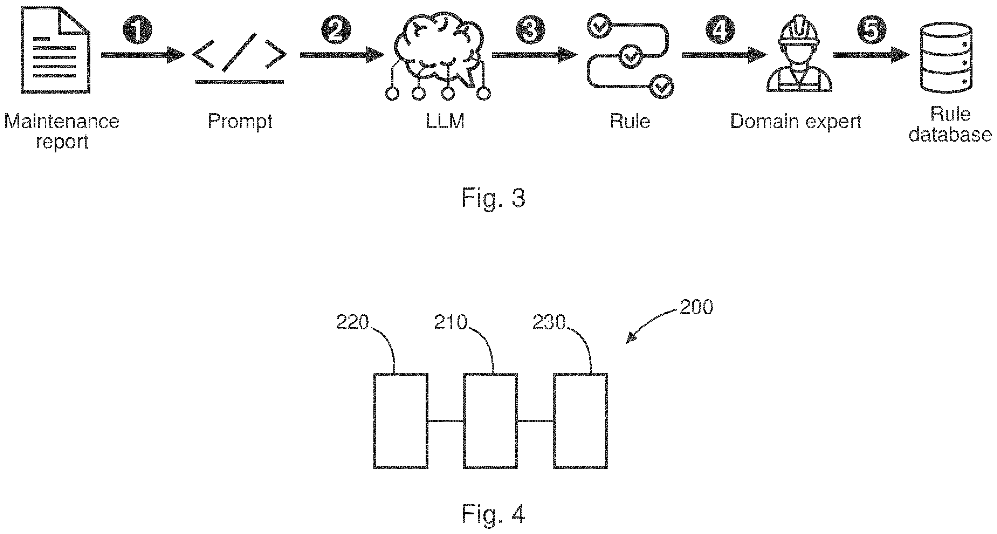

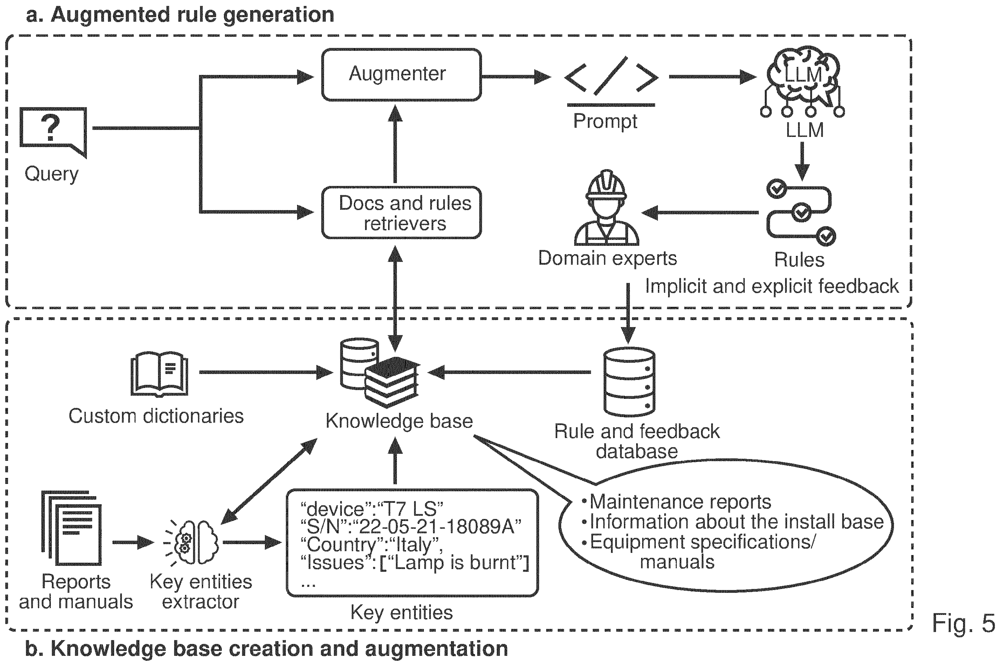

The rule generation system 200 described here is described with respect to figures 4 and 5.

However, the inventors in arriving at the present rule generation system developed a first rule generation system 100, that they realized could be further improved upon.

It is then useful to review the first rule generation system 100, and this leads into a better understanding of the improvements provided by the further developed rule generation system 200.

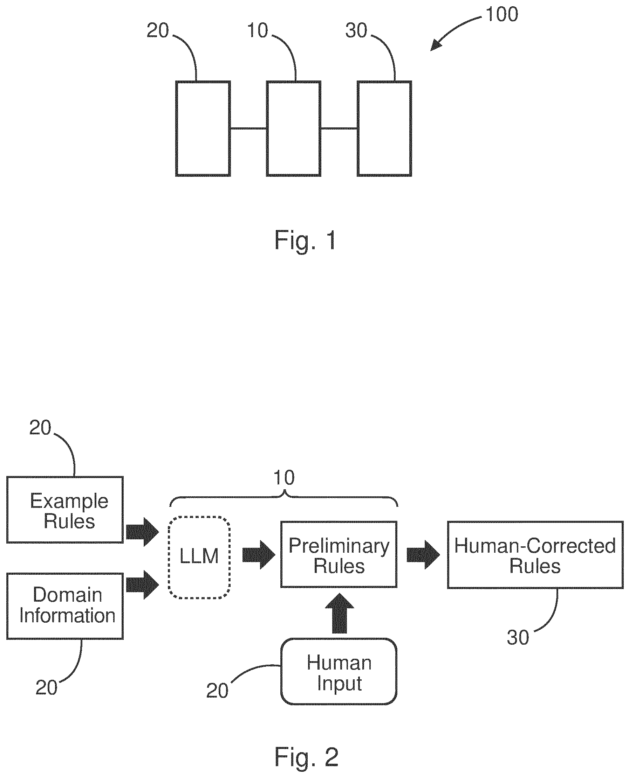

Fig. 1 shows an example first rule generation system 100 for a low, medium or high voltage switchgear, comprising:
- a deterministic rule generator 10;
- an input unit 20; and
- an output unit 30.

The input unit is configured to receive a request for a rule relating to operation of a switchgear. The input unit is configured to provide the request to the deterministic rule generator. The deterministic rule generator is configured to implement a large language model. The deterministic rule generator is configured to generate a switchgear operation rule, and the generation of the switchgear operation rule comprises processing of the request by the large language model. The output unit is configured to output the switchgear operation rule.

Thus, the inventors started from the realization that Large Language Models (LLMs) like ChatGPT are a quick way to get answers for questions on any kind of topic. However, the inventors also realized that LLMs are known to fabricate facts and are thus not fully reliable and act as a black box, so no "debugging" is possible. Rules engines, as used by service personnel for help and guidance in servicing switchgears, depend on a collection of facts presented as rules (e.g., using Ontologies). However, building the knowledge base for such deterministic rules engines is quite time intensive. Thus, the inventors developed a new technique to leverage the ease of use of LLMs with the precision of deterministic tools by using the LLMs to support the creation of the rules.

Fig. 2 shows a detailed example of the first rule generation system.

Today, LLMs can be used to write code snippets that can be used by human programmers to write their own software more quickly. The inventors combined domain information and example rules, and then use the LLM to create preliminary rules suggestions for certain situations related to the domain - servicing of a switchgear.

Thus, as shown in shown in Fig. 2, a human expert will ask the LLM to provide the rules based on his or her idea about what is needed to be in the system. The human can look at the rules and fix them, create variants not covered, and even provide new rules that are still missing. The LLM can be used to generate preliminary rules. This LLM can be a pre-trained LLM, but does not need to be, trained on rule generation data set which is then fine-tuned on more prompt and corresponding generated rule pairs. The finetuned LLMs is provided with additional contextual information in the form of example rules and domain information in the terms of vector embeddings to generate the desired results. As detailed the LLM can be trained, but can be a pre-trained LLM or existing LLM, where the LLM can read available contextual information, but it does not affect its internal parameters.

Thus, Large Language Models (LLMs) like ChatGPT are a quick way to get answers for questions on any kind of topic, however LLMs are known to fabricate facts and are thus not fully reliable. Also, they are black boxes, so one cannot double check easily how they came to their conclusions.

The above described feedback mechanism, involving the generation of preliminary rules and feedback on those rules, addresses this negative aspect of LLMs.

Thus, a deterministic rules engine that serves as a support tool for the service personnel that can guide them, based on the state of the machine (e.g., Switchgears) on what actions need to be performed to maintain a machine, can be utilized with newly generated rule.

The deterministic rules engine can for example be a series of instructions on smartphone or something deployed on the machine to be serviced. Deterministic rules engines depend on a collection of facts presented as rules (e.g., using Ontologies). However, previously building the knowledge base was quite time intensive. Now, the rules used by the deterministic rules engine can be generated in a new way, as described above.

Fig. 3 then in effect shows a general method for rule generation/extraction, to extract (structured) rules from (unstructured) maintenance reports, which is summary involves the following steps:
1. A prompt is built to instruct an LLM to extract a rule from a maintenance report (step 1 in Fig. 3). The prompt may include (i) the text from the maintenance report and (ii) the instructions to extract a rule;
2. The prompt is fed to the LLM (step 2 in Fig. 3);
3. The LLM extracts a structured, actionable rule (step 3 in Fig. 3);
4. A human expert reviews and eventually edits the generated rule (step 4 in in Fig. 3);
5. The rule is stored (step 5 in Fig. 3).

The inventors realized that the first rule generation system 100 could be improved upon, because the following applied to the first rule generation system 100:
a. The LLM may lack domain-specific and product-specific knowledge (e.g., about which parts compose a Switchgear, their function, and working principles).
b. The feedback from human experts (i.e., rule editors and field operators, who use the rules in the real world) is not included in the generation of new rules.
c. Maintenance reports come from a variety of countries and languages, with significantly different terms and slang.
d. Extracting structured information from unstructured reports is challenging.
e. Information in the report may be partially incomplete and inconsistent.

The inventors realized that due to the booming development in generative Al, the application of retrieval-augmented generation (RAG) models has gained significant traction. It was realized that these models are particularly effective in scenarios that require the generation of contextually relevant responses based on large, unstructured datasets. By combining retrieval-based methods with generative models, RAG workflows have been successfully employed in tasks such as question answering. However, for highly specialized domains, RAG systems often fail due to the lack of domain knowledge.

The inventors established that a core challenge in current RAG workflow is the limited ability to generate domain-specific knowledge without adding hallucination. Although RAG can efficiently retrieve synthesized information from large datasets, there is no mechanism, that can evaluate the quality of a response with respect to technical aspects.

The inventors then further developed the first rule generation system 100 to provide the further improved rule generation system 200, that addressed these issues. The inventors realized that in effect they needed to provide for the provision of relevant information, for example from domain experts, into the RAG workflow, to enhance the relevance of retrieved information and guide the model to produce high quality response.

Fig. 4 shows an example of the further improved rule generation system 200 for a low, medium or high voltage switchgear, comprising:
- a rule generator engine 210;
- an input unit 220; and
- an output unit 230.

The input unit is configured to receive a query regarding an activity relating to a switchgear. The activity relating to the switchgear comprises one or more of: operation of the switchgear, maintenance of the switchgear, rectification of one or more problems with the switchgear.

The input unit is configured to provide the query to the rule generator engine.

The rule generator engine is configured to retrieve information from a knowledge base, the retrieval comprising utilization of the query.

The rule generator engine is configured to generate a prompt. The prompt comprises the query and the retrieved information.

The rule generator engine is configured to generate and/or extract one or more switchgear operation rules. The generation and/or extraction of the one or more switchgear operation rules comprises utilization of a large language model to process the prompt.

The output unit is configured to output and/or save the one or more switchgear operation rules.

The input unit can be a single input interface or multiple different input interfaces that perform the functions as described.

The rule generator engine can be one or more processors that perform the functions as described.

The knowledge base can be one or more databases, computational storage media, and can include storage media of the rule generation system itself and/or the rule generation system can interrogate storage media external to the rule generation system as part of the retrieval of the information.

In an example, the query is input from an operator or technician.

The output unit can be a single input interface or multiple different input interfaces that perform the functions as described.

Thus, a new technique is provided that makes use of a Large Language Model (LLM) such as ChatGPT to determine switchgear operation rules that can then be used, to support service personnel to guide them when working on a switchgear, wherein domain specific knowledge is utilized to augment the process of generating the rules.

The new development, where relevant information from a knowledge base is utilized in the generation/extraction of rules mitigates problems that could be caused by a LLM lacking domain specific and/or product specific knowledge.

In an example, the one or more switchgear operation rules are saved in the knowledge base.

In an example, the one or more switchgear operation rules are output to another system.

In an example, the query is in a natural language.

In an example, the one or more switchgear operation rules comprises a switchgear operation rule that comprises computational code.

In an example, the one or more switchgear operation rules comprises a switchgear operation rule that comprises natural language.

In an example, the rule generator engine is configured to utilize the large language model to process the prompt to generate and/or extract one or more preliminary switchgear operation rules. The output unit is configured to output the one or more preliminary switchgear operation rules. The input unit is configured to receive an edit request for an edit to at least one preliminary switchgear operation rule of the one or more preliminary switchgear operation rules. The generation and/or extraction of the one or more switchgear operation rules comprises utilization of the edit request.

In an example, the edit request is input by the operator or technician who input the query, but can also be input by another person such as an expert operator or senior technician.

In this manner, human feedback is provided to fine tune the rules, thereby in effect validating the output of the rule generation system and making the rules that are finally provided more fit for purpose.

Thus, for example a preliminary rule is output onto a screen for an operator or technician or sensor person to validate and edit is necessary.

In an example, the input unit is configured to receive a feedback request to be associated with at least one preliminary switchgear operation rule of the one or more preliminary switchgear operation rules, and wherein the generation and/or extraction of the one or more switchgear operation rules comprises utilization of the feedback request.

Thus, an operator or technician or expert can indicate that a particular rule is one or more of suitable for the current situation, most suitable for the current situation, should be used in conjunction with another rule, has been used successfully before, indicates what steps are most complicated or need to be carried out most carefully.

In an example, the one or more preliminary switchgear operation rules comprises a preliminary switchgear operation rule that comprises computational code.

In an example, the one or more preliminary switchgear operation rules comprises a preliminary switchgear operation rule that comprises natural language.

In an example, the edit request is in a natural language.

In an example, the large language model has been trained on a plurality of example rules relating to operation of the switchgear and associated domain information.

To put this another way, the LLM is finetuned/trained through the provision of contextual information in the form of examples and domain information, that could be in the form of vector embeddings, in order that desired results are generated.

In an example, the large language model is a pre-trained LLM.

To put this another way, the LLM can be an existing LLM, where the LLM can read available contextual information, but it does not affect its internal parameters.

In an example, the information retrieved from the knowledge base comprises one or more historical rules.

In an example, the information retrieved from the knowledge base comprises information from one or more humans relating to the one or more historical rules.

In an example, the information from one or more humans relating to the one or more historical rules comprises feedback from human experts, feedback from a rule designer, feedback from an operator who utilized the rule in the field.

Thus, the generation/extraction of rules for a particular task can utilize previously generated rules that have been validated and/or commented upon by experts who generated and/or utilized the rules

In other words, in the generation / extraction of new rules, feedback from human experts is taken into account, where those human experts can for example be rule editors and/or field operators who use the rules in the real world.

To put this another way, explicit feedback can be provided, but additionally or alternatively such feedback can be implicit.

Thus, explicit feedback can be provided by a human such as a technician after using the rule or an expert or implicit feedback can be provided based on for example on how many times a rule has been used successfully, that provides implicit feedback in terms of validation of the rule.

The explicit feedback can for example be that an operator or expert provides feedback that an action step in a rule makes no sense and/or provides feedback in the form of a suggested new action step.

In an example, the information retrieved from the knowledge base comprises information from technical dictionaries and/or information from synonym resolution systems.

In an example, the information from technical dictionaries and/or information from synonym resolution systems comprises information mapping technical terms with normal language terms.

In this way, the required relevant information to augment the generation and/or extraction of rules can be retrieved from maintenance or service reports even when those reports are from different countries and written in different languages, where different terms and even slang could be used in such different reports

In an example, the information retrieved from the knowledge base comprises information from one or more service reports of a plurality of service reports, wherein the plurality of service reports comprise natural language in one or more different languages, the one or more different languages comprising one or more of English, German, French, Italian, Spanish, French, Portuguese, Japanese, Chinese.

In an example, the plurality of service reports comprise one or more pre-processed service reports. The input unit is configured to receive a new service report. The rule generation system is configured to utilize an entity recognition and extraction algorithm to extract information from the new report to generate a pre-processed version of the new report. The information extracted from the new report comprises one or more of a type of device, a serial number of a device, a facility where a device was located, a country where a device was located, a problem associated with a device, work carried out to fix a problem with a device. The output unit is configured to save the pre-processed version of the new report in the knowledge base.

In an example, the input unit is configured to receive a new service report. The rule generation system is configured to utilize the entity recognition and extraction algorithm to extract information from the new report to generate an entity file associated with the new service report. The information extracted from the new service report comprises one or more of a type of device, a serial number of a device, a facility where a device was located, a country where a device was located, a problem associated with a device, work carried out to fix a problem with a device. The output unit is configured to save the entity file associated with the new service report and the new report in the knowledge base.

Thus, by in effect preparing reports as they are received and saving these reports as prepared reports in the knowledge base, the relevant information can be readily retrieved from the knowledge base even when a raw new report was an unstructured report.

In other words, structured information is enabled to be retrieved from unstructured reports or indeed from incomplete reports.

Thus, as new service reports come in, relevant information in the report such as type of device, a serial number of a device, a facility where a device was located, a country where a device was located, can be extracted and if necessary transformed into a standard format that facilitates searching and this extracted information can be inserted back into the new service report and saved in a database or saved in the database as a separate file associated with the new service report.

Thus, a pre-processed version of a new service report can be a new service report with extracted information or can be in effect two files, the new service report itself and a separate file with the extracted information from the new service report.

A rule generation method for a low, medium or high voltage switchgear is associated with the further improved rule generation system 200. The method comprises:
- receiving, by an input unit, a query regarding an activity relating to a switchgear, wherein the activity comprises one or more of operation of the switchgear, maintenance of the switchgear, rectification of one or more problems with the switchgear;
- providing, by the input unit, the query to a rule generator engine;
- retrieving, by the rule generator engine, information from a knowledge base, the retrieving comprising utilizing the query;
- generating, by the rule generator engine, a prompt, wherein the prompt comprises the query and the retrieved information;
- generating and/or extracting, by the rule generator engine, one or more switchgear operation rules, wherein the generating and/or extracting the one or more switchgear operation rules comprises utilizing a large language model to process the prompt; and
- outputting and/or saving, by an output unit, the one or more switchgear operation rules.

The input unit can be a single input interface or multiple different input interfaces that perform the functions as described.

The rule generator engine can be one or more processors that perform the functions as described.

The knowledge base can be one or more databases, computational storage media, and can include storage media of the rule generation system itself and/or the rule generation system can interrogate storage media external to the rule generation system as part of the retrieval of the information.

In an example, the query is input from an operator or technician.

The output unit can be a single input interface or multiple different input interfaces that perform the functions as described.

Thus, a new technique is provided that makes use of a Large Language Model (LLM) such as ChatGPT to determine switchgear operation rules that can then be used, to support service personnel to guide them when working on a switchgear, wherein domain specific knowledge is utilized to augment the process of generating the rules.

The new development, where relevant information from a knowledge base is utilized in the generation/extraction of rules mitigates problems that could be caused by a LLM lacking domain specific and/or product specific knowledge.

In an example, the one or more switchgear operation rules are saved in the knowledge base.

In an example, the one or more switchgear operation rules are output to another system.

In an example, the query is in a natural language.

In an example, the one or more switchgear operation rules comprises a switchgear operation rule that comprises computational code.

In an example, the one or more switchgear operation rules comprises a switchgear operation rule that comprises natural language.

In an example, the method comprises:
- utilizing, by the rule generator engine, the large language model to process the prompt to generate and/or extract one or more preliminary switchgear operation rules;
- outputting, by the output unit, the one or more preliminary switchgear operation rules;
- receiving, by the input unit, an edit request for an edit to at least one preliminary switchgear operation rule of the one or more preliminary switchgear operation rules; and
- the generating and/or extracting the one or more switchgear operation rules comprises utilizing the edit request.

In an example, the edit request is input by the operator or technician who input the query, but can also be input by another person such as an expert operator or senior technician.

In this manner, human feedback is provided to fine tune the rules, thereby in effect validating the output of the rule generation system and making the rules that are finally provided more fit for purpose.

Thus, for example a preliminary rule is output onto a screen for an operator or technician or sensor person to validate and edit is necessary.

In an example, method comprises:
- receiving, by the input unit, a feedback request to be associated with at least one preliminary switchgear operation rule of the one or more preliminary switchgear operation rules; and
- the generating and/or extracting the one or more switchgear operation rules comprises utilizing the feedback request.

Thus, an operator or technician or expert can indicate that a particular rule is one or more of suitable for the current situation, most suitable for the current situation, should be used in conjunction with another rule, has been used successfully before, indicates what steps are most complicated or need to be carried out most carefully.

In an example, the one or more preliminary switchgear operation rules comprises a preliminary switchgear operation rule that comprises computational code.

In an example, the one or more preliminary switchgear operation rules comprises a preliminary switchgear operation rule that comprises natural language.

In an example, the edit request is in a natural language.

In an example, the large language model has been trained on a plurality of example rules relating to operation of the switchgear and associated domain information.

To put this another way, the LLM is finetuned/trained through the provision of contextual information in the form of examples and domain information, that could be in the form of vector embeddings, in order that desired results are generated.

In an example, the large language model is a pre-trained LLM.

To put this another way, the LLM can be an existing LLM, where the LLM can read available contextual information, but it does not affect its internal parameters.

In an example, the information retrieved from the knowledge base comprises one or more historical rules.

In an example, the information retrieved from the knowledge base comprises information from one or more humans relating to the one or more historical rules.

In an example, the information from one or more humans relating to the one or more historical rules comprises feedback from human experts, feedback from a rule designer, feedback from an operator who utilized the rule in the field.

Thus, the generation/extraction of rules for a particular task can utilize previously generated rules that have been validated and/or commented upon by experts who generated and/or utilized the rules.

In other words, in the generation / extraction of new rules, feedback from human experts is taken into account, where those human experts can for example be rule editors and/or field operators who use the rules in the real world.

To put this another way, explicit feedback can be provided, but additionally or alternatively such feedback can be implicit.

Thus, explicit feedback can be provided by a human such as a technician after using the rule or an expert or implicit feedback can be provided based on for example on how many times a rule has been used successfully, that provides implicit feedback in terms of validation of the rule.

The explicit feedback can for example be that an operator or expert provides feedback that an action step in a rule makes no sense and/or provides feedback in the form of a suggested new action step.

In an example, the information retrieved from the knowledge base comprises information from technical dictionaries and/or information from synonym resolution systems.

In an example, the information from technical dictionaries and/or information from synonym resolution systems comprises information mapping technical terms with normal language terms.

In this way, the required relevant information to augment the generation and/or extraction of rules can be retrieved from maintenance or service reports even when those reports are from different countries and written in different languages, where different terms and even slang could be used in such different reports.

In an example, the information retrieved from the knowledge base comprises information from one or more service reports of a plurality of service reports, wherein the plurality of service reports comprise natural language in one or more different languages, the one or more different languages comprising one or more of English, German, French, Italian, Spanish, French, Portuguese, Japanese, Chinese.

In an example, wherein the plurality of service reports comprise one or more pre-processed service reports, and wherein the method comprises:
- receiving, by the input unit, a new service report;
- utilizing, by the rule generation system, an entity recognition and extraction algorithm to extract information from the new report to generate a pre-processed version of the new report, and wherein the information extracted from the new report comprises one or more of a type of device, a serial number of a device, a facility where a device was located, a country where a device was located, a problem associated with a device, work carried out to fix a problem with a device, and
- saving, by the output unit, the pre-processed version of the new report in the knowledge base.

In an example, the method comprises:
- receiving, by the input unit, a new service report;
- utilizing, by the rule generation system, the entity recognition and extraction algorithm to extract information from the new report to generate an entity file associated with the new service report, and wherein the information extracted from the new service report comprises one or more of a type of device, a serial number of a device, a facility where a device was located, a country where a device was located, a problem associated with a device, work carried out to fix a problem with a device; and
- saving, by the output unit, the entity file associated with the new service report and the new report in the knowledge base.

Thus, by in effect preparing reports as they are received and saving these reports as prepared reports in the knowledge base, the relevant information can be readily retrieved from the knowledge base even when a raw new report was an unstructured report.

In other words, structured information is enabled to be retrieved from unstructured reports or indeed from incomplete reports.

Thus, as new service reports come in, relevant information in the report such as type of device, a serial number of a device, a facility where a device was located, a country where a device was located, can be extracted and if necessary transformed into a standard format that facilitates searching and this extracted information can be inserted back into the new service report and saved in a database or saved in the database as a separate file associated with the new service report.

Thus, a pre-processed version of a new service report can be a new service report with extracted information or can be in effect two files, the new service report itself and a separate file with the extracted information from the new service report.

Thus, the further developed rule generation system built upon and augmented the first rule generation system to improve the quality of the rules generated by the LLM. Specifically, this was achieved through the use of an extensive, domain-specific knowledge base to enhance rule generation. Such a knowledge base is augmented with (i) previously generated and validated rules with feedback from human experts who designed / used the rules, (ii) custom technical dictionaries and synonym resolution systems, and (iii) structured information extracted from unstructured reports and manuals.

Thus, the further development of the rule generation system 200 involves augmenting and improving the rule generation process by providing the LLM with more, contextually relevant information. Such information is retrieved from a knowledge base containing domain-specific information including, but not limited to, manuals, technical datasheets, and information about the install base. In addition to these readily available documents, the knowledge base is enriched with ad-hoc data, including previously generated rules with feedback from domain experts, custom dictionaries of industry and company-specific terms and synonym resolution systems, and structured data extracted from maintenance reports through Al-based data preprocessing methods.

The further improved rule generation system 200 is now described in further detail with respect to a very detailed embodiment described with respect to Fig. 5.

Instead of extracting a rule directly from the maintenance report (see Fig. 3), the new development utilizes an approach based on document retrieval and generation - also called Retrieval Augmented Generation (RAG) - which allows the LLM to access more, and more contextually relevant information. The framework of the new development approach is detailed in Fig, 5.

The new development can be conceptually divided into two parts:
1. Augmented rule generation (top dashed box in Fig, 5);
2. Knowledge base creation and enrichment (bottom dashed box in Fig. 5).

The **augmented rule generation framework** is specifically directed to addressing limitation "a" detailed above. Here, a user can query the rule generation system about a problem that may occur during maintenance activity; for example, a query could be "How to solve issues with bad SF6 gas quality after refilling a SafePlus RMU?". This query is used to **retrieve relevant information from a knowledge base (KB),** which is detailed in the next paragraph. Only relevant information is retrieved, via mechanisms including, but not limited to, semantic similarity search and LLM-aided retrieval mechanism. Such information is passed to the augmenter which crafts a prompt containing (I) the user query, and (ii) the retrieved information. Based on the information included in the prompt, the LLM extracts rules, which are finally reviewed, edited, approved, and eventually used by **human experts.**

The **knowledge base** contains **domain-specific information** stored in different data formats including, but not limited to, textual documents, tabular data, images, and videos. The knowledge base can include maintenance reports, manuals equipment specifications, and information about the install base and equipment maintenance history. In addition to this readily available documentation, the knowledge base is enriched with:
i. **Previously extracted rules with feedback from human experts.**
   This is directed at addressing limitation "b" in detailed above.
   Historical rules are stored in a database together with the feedback from human experts, including the rule designer and the operators using the rules on the field. Such information can be retrieved from the Knowledge base to improve the generation of new rules.
ii. **Custom technical dictionaries and synonym resolution systems.**
   This is directed at addressing challenge "c" in detailed above.
   Synonym resolution systems and dictionaries mapping technical terms and slang from different languages are built and included in the Knowledge. Such technical terms mapping, are used to align the terminology across different languages and support the LLM in analyzing technical, multilingual, domain-specific, and company-specific terms that may not have been encountered during pre-training.
iii. **Information extracted from unstructured reports and manuals.**

This is directed at addressing challenge "d" and "e" detailed above.

Extracting information from unstructured reports is challenging, especially considering that reports may be incomplete and inconsistent. In the first rule generation system 100 (Fig. 3), information is extracted from the report and structured into a rule in a single step.

For the further development of the rule generation system 200 a development is to decouple the information extraction step from rule generation by means of a dedicated, **Al-based preprocessing framework.** In this context, every time a new report is uploaded, an Al-based key entities recognition and extraction algorithm extracts meaningful pieces of information from the report, such as the device that was fixed, its serial number, the facility and country of intervention, the problem faced by the technician, and more.

This process may be fully or partially automated. Optionally, extracted entities can be reviewed and validated by human experts, whose **feedback can be used to tune, or self-tune, the information extraction system.**

In addition, **extracted items are compared to / augmented with existing knowledge base to ensure consistency.** Specifically, if a piece of information is not available in the report, the system can search for the missing information in the Knowledge base. The system can also check if the information in the report is consistent with respect to other reports about the same device or from the same facility, thereby improving the quality and consistency of extracted information. Therefore, the Knowledge base does not only contain the maintenance report, but also its structured and preprocessed version.

The three additional sources of information mentioned above drastically improve the quality and relevancy of information included in the Knowledge base, thereby increasing the quality and quantity of information available for the LLM and providing crucial support to rule generation.

Overall, the further developed rule generation system 200 provides the following advantages:
- improve accuracy and quality of generated rules by including specific domain knowledge;
- utilization of a (possibly centralized) knowledge base augmented with structured information extracted from unstructured reports lays the foundation for better / new digital solutions
- Systematically cope with incomplete or low quality service reports.
- Human-in-the-loop for quality for better explainability.
- Improve the consistency and completeness of response.

In another exemplary embodiment, a computer program or computer program element is provided that is characterized by being configured to execute the method steps of the method according to one of the preceding embodiments, on an appropriate processor or system.

The computer program element might therefore be stored on a computer unit, which might also be part of an embodiment. This computing unit may be configured to perform or induce performing of the steps of the method described above. Moreover, it may be configured to operate the components of the above described system. The computing unit can be configured to operate automatically and/or to execute the orders of a user. A computer program may be loaded into a working memory of a data processor. The data processor may thus be equipped to carry out the method according to one of the preceding embodiments.

This exemplary embodiment of the invention covers both, a computer program that right from the beginning uses the invention and computer program that by means of an update turns an existing program into a program that uses the invention.

Further on, the computer program element might be able to provide all necessary steps to fulfill the procedure of an exemplary embodiment of the method as described above.

According to a further exemplary embodiment of the present invention, a computer readable medium, such as a CD-ROM, USB stick or the like, is presented wherein the computer readable medium has a computer program element stored on it which computer program element is described by the preceding section.

A computer program may be stored and/or distributed on a suitable medium, such as an optical storage medium or a solid state medium supplied together with or as part of other hardware, but may also be distributed in other forms, such as via the internet or other wired or wireless telecommunication systems.

However, the computer program may also be presented over a network like the World Wide Web and can be downloaded into the working memory of a data processor from such a network. According to a further exemplary embodiment of the present invention, a medium for making a computer program element available for downloading is provided, which computer program element is arranged to perform a method according to one of the previously described embodiments of the invention.

## Claims

1. A rule generation system (200) for a low, medium or high voltage switchgear, comprising:
- a rule generator engine (210);
- an input unit (220); and
- an output unit (230);
wherein the input unit is configured to receive a query regarding an activity relating to a switchgear, wherein the activity comprises one or more of operation of the switchgear, maintenance of the switchgear, rectification of one or more problems with the switchgear;
wherein the input unit is configured to provide the query to the rule generator engine;
wherein the rule generator engine is configured to retrieve information from a knowledge base, the retrieval comprising utilization of the query;
wherein the rule generator engine is configured to generate a prompt, wherein the prompt comprises the query and the retrieved information;
wherein the rule generator engine is configured to generate and/or extract one or more switchgear operation rules, wherein the generation and/or extraction of the one or more switchgear operation rules comprises utilization of a large language model to process the prompt; and
wherein the output unit is configured to output and/or save the one or more switchgear operation rules.

2. System according to claim 1, wherein the query is in a natural language.

3. System according to any of claims 1-2, wherein the one or more switchgear operation rules comprises a switchgear operation rule that comprises natural language.

4. System according to any of claims 1-3, wherein the rule generator engine is configured to utilize the large language model to process the prompt to generate and/or extract one or more preliminary switchgear operation rules, wherein the output unit is configured to output the one or more preliminary switchgear operation rules, wherein the input unit is configured to receive an edit request for an edit to at least one preliminary switchgear operation rule of the one or more preliminary switchgear operation rules, and wherein the generation and/or extraction of the one or more switchgear operation rules comprises utilization of the edit request.

5. System according to claim 4, wherein the one or more preliminary switchgear operation rules comprises a preliminary switchgear operation rule that comprises natural language.

6. System according to any of claims 4-5, wherein the edit request is in a natural language.

7. System according to any of claims 1-6, wherein the large language model has been trained on a plurality of example rules relating to operation of the switchgear and associated domain information.

8. System according to any of claims 1-7, wherein the information retrieved from the knowledge base comprises one or more historical rules.

9. System according to claim 8, wherein the information retrieved from the knowledge base comprises information from one or more humans relating to the one or more historical rules.

10. System according to any of claims 1-9, wherein the information retrieved from the knowledge base comprises information from technical dictionaries and/or information from synonym resolution systems.

11. System according to claim 10, wherein the information from technical dictionaries and/or information from synonym resolution systems comprises information mapping technical terms with normal language terms.

12. System according to any of claims 1-11, wherein the information retrieved from the knowledge base comprises information from one or more service reports of a plurality of service reports, wherein the plurality of service reports comprise natural language in one or more different languages, the one or more different languages comprising one or more of English, German, French, Italian, Spanish, French, Portuguese, Japanese, Chinese.

13. System according to claim 12, wherein the plurality of service reports comprise one or more pre-processed service reports, wherein the input unit is configured to receive a new service report, wherein the rule generation system is configured to utilize an entity recognition and extraction algorithm to extract information from the new report to generate a pre-processed version of the new report, and wherein the information extracted from the new report comprises one or more of a type of device, a serial number of a device, a facility where a device was located, a country where a device was located, a problem associated with a device, work carried out to fix a problem with a device, and wherein the output unit is configured to save the pre-processed version of the new report in the knowledge base.

14. A rule generation method for a low, medium or high voltage switchgear, comprising:
- receiving, by an input unit, a query regarding an activity relating to a switchgear, wherein the activity comprises one or more of operation of the switchgear, maintenance of the switchgear, rectification of one or more problems with the switchgear;
- providing, by the input unit, the query to a rule generator engine;
- retrieving, by the rule generator engine, information from a knowledge base, the retrieving comprising utilizing the query;
- generating, by the rule generator engine, a prompt, wherein the prompt comprises the query and the retrieved information;
- generating and/or extracting, by the rule generator engine, one or more switchgear operation rules, wherein the generating and/or extracting the one or more switchgear operation rules comprises utilizing a large language model to process the prompt; and
- outputting and/or saving, by an output unit, the one or more switchgear operation rules.

15. A computer program element for controlling a processor to carry out the method of claim 14.
